# FASCICULE DE BREVET EUROPEEN

(11) **EP 3 661 656 B1**
(45) Date de publication et mention de la délivrance du brevet: **01.09.2021**
(21) Numéro de dépôt: 18755526.3
(22) Date de dépôt: 26.07.2018
(51) Int. Cl.: B05B 7/08, B05B 1/20, B05B 7/02, C03C 25/146, D04H 1/4226, D04H 1/655, D04H 1/4218, B05B 7/14

(54) **INSTALLATION DE FABRICATION DE LAINE MINÉRALE ET DISPOSITIF DE PROJECTION D'UNE COMPOSITION D'ENCOLLAGE ÉQUIPANT UNE TELLE INSTALLATION**
ANLAGE ZUR HERSTELLUNG VON MINERALWOLLE UND VORRICHTUNG ZUM SPRITZEN EINES BINDERS IN EINER SOLCHEN ANLAGE
PLANT FOR MANUFACTURING MINERAL WOOL AND DEVICE FOR SPLATTERING A BINDER COMPOSITION WITHIN SUCH A PLANT

(30) Priorité: 31.07.2017 FR 1770812
(43) Date de publication de la demande: 10.06.2020
(73) Titulaire: SAINT-GOBAIN ISOVER, 92400 Courbevoie (FR)
(72) Inventeur: D'HERIN BYTNER, Frédéric, 75009 Paris (FR)
(74) Mandataire: Ex Materia
(86) Numéro de dépôt international: PCT/FR2018/051928
(87) Numéro de publication internationale: WO 2019/025707

(56) Documents cités:
- WO-A1-2008/085461
- FR-A1- 2 878 864
- US-A- 3 901 675
- US-A1- 2012 144 868

## Description

L'invention a trait au domaine de la fabrication de laine minérale, du type par exemple laine de verre, et elle concerne plus particulièrement les opérations et les systèmes correspondants de projection de liant entre et ou sur les fibres.

Des installations de fabrication de laine minérale comportent classiquement plusieurs postes successifs parmi lesquels un poste de fibrage, dans lequel on crée la fibre de verre, un poste d'encollage, dans lequel on lie les fibres entre elles par ajout d'une composition d'encollage, et un poste de réticulation dans lequel on transforme par chauffage le matelas de fibres encollées entre elles obtenu précédemment pour former la laine minérale.

De manière plus détaillée, du verre fondu est déposé dans une assiette rotative qui forme dans le poste de fibrage un dispositif de centrifugation, à l'extérieur duquel s'échappent des fibres de verres qui tombent en direction d'un convoyeur, sous l'effet d'un flux d'air descendant. Sur le passage des fibres tombant vers ce convoyeur, on pulvérise la composition d'encollage participant à former le liant sur le passage des fibres. Afin d'éviter l'évaporation de la composition d'encollage, on peut réaliser une opération de refroidissement des fibres à encoller, par la projection d'un liquide de refroidissement et notamment de l'eau en aval de l'opération d'encollage. Les fibres encollées une fois refroidies tombent sur le convoyeur et le matelas ainsi formé est ensuite dirigé en direction d'une étuve formant le poste de réticulation, dans laquelle le matelas est simultanément asséché et soumis à un traitement thermique spécifique qui provoque la polymérisation (ou « durcissement ») de la résine du liant présent à la surface des fibres.

Le matelas continu de laine minérale est ensuite destiné à être découpé pour former par exemple des panneaux ou rouleaux d'isolation thermique et/ou acoustique.

La projection de liant est maitrisée au moment du passage des fibres à encoller. On connait de l'art antérieur, et notamment du document WO 2006/044351 A2 un dispositif de projection de liant comportant deux couronnes annulaires porteuses de buses de pulvérisation et à l'intérieur desquelles passent successivement les fibres de verres. Une couronne est reliée à un réservoir de liant et chaque buse de pulvérisation associée à cette première couronne est configurée pour recevoir d'une part une quantité de ce liant et d'autre part une quantité d'air comprimé via une alimentation indépendante pour projeter du liant au passage des fibres de verres, et l'autre couronne est reliée à un réservoir de fluide de refroidissement et chaque buse de pulvérisation associée à cette deuxième couronne est configurée pour projeter ce fluide de refroidissement au passage des fibres de verre. On connaît aussi du document US2012/144868 A1 un dispositif de projection de liant comportant un système annulaire qui peut être utilisé pour un liant et/ou un fluide de refroidissement.

On connaît différents types de buses de pulvérisation, et notamment parmi d'autres des buses à jet conique, qui permettent de fournir un jet ponctuel et pouvant pénétrer fortement le tore de fibres de verre passant à travers la couronne annulaire portant ces buses de pulvérisation, ou des buses à jet plat, qui permettent de fournir un jet plus diffus et donc susceptible de se répartir sur le pourtour extérieur du tore de fibres. Dans le document WO 2008/085461, on propose d'agencer différents types de buses de pulvérisation sur une même couronne, et notamment en alternant des buses à jet concentré et des buses à jet plat, afin de projeter de l'encollant aussi bien sur l'intérieur que sur l'extérieur du tore de fibres de verre.

Dans ce contexte d'implantation des buses de pulvérisation sur une couronne annulaire de projection d'encollant sur le passage de fibres de verre, il convient de prendre en compte la possibilité qu'une des buses soit déficiente, et notamment qu'elle soit bouchée, ce qui peut générer, pendant une courte période avant que cette buse déficiente soit remplacée, une distribution du liant qui n'est plus homogène sur tout le pourtour du tore formé par les fibres de verre. L'ajout de buses de pulvérisation pouvant seconder une telle déficience pose le problème de l'agencement des buses sur la couronne.

La présente invention s'inscrit dans ce contexte et vise à proposer un dispositif annulaire de projection d'une composition d'encollage sur des fibres minérales, par exemple des fibres de verre, comportant au moins un circuit de distribution de ladite composition d'encollage et une pluralité de buses de pulvérisation communiquant fluidiquement avec le circuit de distribution et réparties sur le pourtour du dispositif annulaire de projection pour projeter la composition d'encollage sur les fibres destinées à passer à l'intérieur du dispositif annulaire de projection défini par un axe de révolution, chaque buse de pulvérisation étant orientée vers l'intérieur du dispositif annulaire de projection avec un angle d'inclinaison déterminé par rapport au plan de révolution du dispositif annulaire de projection. Selon l'invention, au moins deux buses de pulvérisation consécutivement agencées sur le pourtour du dispositif annulaire de projection sont disposées de manière à présenter une orientation par rapport au plan de révolution du dispositif annulaire de projection d'un angle d'inclinaison différent l'une de l'autre.

Une telle solution permet d'augmenter le nombre de buses sans prendre le risque que des jets de composition d'encollage se croisent. Les inventeurs ont en effet découvert qu'il était bénéfique de ne pas laisser se faire croiser les jets pulvérisés par ces buses, une telle interférence pouvant générer une modification du calibre des gouttes formées par coalescence. Ainsi, il est possible selon l'invention de disposer des buses proches l'une de l'autre, pour assurer un recouvrement du tore de fibres supérieur à 100% et s'assurer que le tore de fibres soit correctement encollé même en cas de défaillance d'une buse, tout en évitant le risque si elles fonctionnent toutes simultanément que les jets pulvérisés par ces buses ne soient pas à la forme souhaitée. On vise ainsi une homogénéité de la distribution de composition d'une composition d'encollage sur un tore de fibres de verre, puisqu'on peut projeter cette composition d'encollage sur tout le pourtour du tore et avec une forme maitrisée des gouttes qui ne varient pas selon la zone de pulvérisation.

Selon différentes caractéristiques de l'invention, prises seules ou en combinaison, on pourra prévoir que :
- lesdites au moins deux buses de pulvérisation consécutivement agencées sur le pourtour du dispositif annulaire de projection présentent une forme identique, ne se distinguant l'une de l'autre que par l'inclinaison de leur canal de sortie ; on comprend dès lors que selon l'invention des buses de pulvérisation successives se distinguent essentiellement par leur orientation différente par rapport au plan de révolution du dispositif annulaire de projection, la forme identique ou distincte, aussi bien dans leur enveloppe extérieure que dans le type de jet qu'elle réalise par exemple, étant une caractéristique de différenciation secondaire ;
- l'angle d'inclinaison d'une buse de pulvérisation par rapport au plan de révolution est compris entre 0 et 80° ; de préférence, cet angle d'inclinaison est compris entre 5° et 80° ; une inclinaison minimale de 5° est intéressante en ce qu'elle évite un rebond des gouttes de liant sur le tore de fibres passant dans le dispositif annulaire de projection, rebond qui pourrait pénaliser la projection ultérieure de liant ; plus particulièrement, l'angle d'inclinaison peut être compris entre 5° et 70°, une inclinaison maximale de 70° étant intéressante en ce qu'elle évite de pulvériser le liant le long du tore de fibres en direction du convoyeur situé sous le dispositif annulaire de projection et en ce qu'elle permet la pénétration du liant dans le tore de fibres, alors que ces fibres défilent à grande vitesse devant le dispositif annulaire de projection ; avantageusement, l'angle d'inclinaison est compris entre 5° et 60° ;
- chaque buse comporte un corps de fixation rendu solidaire d'un tube annulaire délimitant l'au moins un circuit de distribution, lesdites au moins deux buses de pulvérisation consécutivement agencées sur le pourtour du dispositif annulaire de projection ayant des corps disposés à un même niveau axial relativement à l'axe de révolution du dispositif annulaire de projection ;
- les au moins deux buses de pulvérisation consécutivement agencées sur le pourtour du dispositif annulaire de projection comportent une tête de pulvérisation avec une fente à section rectangulaire de manière à former un jet plat de composition d'encollage ;
- la fente à section rectangulaire s'étend principalement selon une direction parallèle au plan de révolution du dispositif ;
- la fente à section rectangulaire est dimensionnée de sorte que le jet plat de composition d'encollage correspondant présente une ouverture angulaire comprise entre 30° et 120° ;
- les au moins deux buses de pulvérisation consécutivement agencées sur le pourtour du dispositif annulaire de projection comportent une tête de pulvérisation avec une fente à section circulaire de manière à former un jet conique de composition d'encollage ; on pourra également envisager que les au moins deux buses de pulvérisation consécutivement agencées sur le pourtour du dispositif annulaire de projection comportent l'une une tête de pulvérisation avec une fente à section circulaire de manière à former un jet conique de composition d'encollage et l'autre une tête de pulvérisation avec une fente à section rectangulaire de manière à former un jet plat de composition d'encollage ;
- le dispositif annulaire de projection comporte une pluralité de buses de pulvérisation et chaque buse est voisine de buses dont l'orientation par rapport au plan de révolution du dispositif angulaire de projection est différente de la sienne ;
- les buses sont réparties en au moins deux ensembles, entre un premier ensemble dans lequel chaque buse est configurée de sorte que l'orientation par rapport au plan de révolution du dispositif annulaire de projection prend un premier angle d'inclinaison et un deuxième ensemble dans lequel chaque buse est configurée de sorte que l'orientation par rapport au plan de révolution du dispositif annulaire de projection prend un deuxième angle d'inclinaison distinct du premier angle, les buses de pulvérisation étant agencées sur le pourtour du dispositif annulaire de projection avec une alternance de buses du premier ensemble et de buses du deuxième ensemble ;
- les buses du premier ensemble sont configurées de sorte qu'elles sont orientées par rapport au plan de révolution du dispositif annulaire de projection avec un premier angle d'inclinaison compris entre 0° et 45° ; de préférence, le premier angle d'inclinaison peut être compris entre 5° et 40° ;
- les buses du deuxième ensemble sont configurées de sorte qu'elles sont orientées par rapport au plan de révolution du dispositif annulaire de projection avec un deuxième angle d'inclinaison compris entre 25° et 80° ; de préférence, le deuxième angle d'inclinaison peut être compris entre 25° et 60° ;
- le circuit de la composition d'encollage comporte une alimentation unique et une pluralité d'orifices communiquant respectivement avec une buse de pulvérisation ;
- le circuit de distribution présente une section interne moyenne continue ;
- le dispositif annulaire de projection comporte deux circuits de distribution distincts décalés le long de l'axe de révolution du dispositif annulaire de projection, les buses de pulvérisation étant agencées entre ces deux circuits de distribution de manière à être en communication fluidique avec chacun desdits circuits de distribution ;
- un premier circuit de distribution est configuré pour recevoir ladite composition d'encollage et un deuxième circuit de distribution est configuré pour recevoir de l'air comprimé ;
- le premier circuit de distribution présente une section moyenne de diamètre inférieur au diamètre de la section moyenne du deuxième circuit de distribution ;
- le dispositif annulaire de projection comporte un unique circuit de distribution sur lequel sont fixés les buses de pulvérisation, ces buses de pulvérisation étant agencées avec des inclinaisons différentes sur cet unique circuit de distribution de sorte qu'au moins deux buses de pulvérisation consécutivement agencées sur le pourtour du dispositif annulaire de projection présentent un angle différent par rapport au plan de révolution du dispositif annulaire de projection ;
- le dispositif annulaire de projection comporte des moyens de contrôle du débit d'air comprimé en fonction de la quantité de composition d'encollage à projeter sur les fibres.

L'invention concerne également une installation de fabrication de laine minérale, comportant des moyens de fibrage configurés pour amener des fibres à l'intérieur d'un poste d'encollage et notamment d'encollage de ces fibres, caractérisée en ce que le poste d'encollage comporte uniquement un dispositif d'encollage formé par un dispositif annulaire de projection de composition d'encollage conforme à ce qui vient d'être décrit, le dispositif annulaire étant agencé de manière à présenter un plan de révolution sensiblement perpendiculaire à la direction de passage du tore de fibres à encoller.

Il convient de noter qu'une installation de ce type est particulièrement avantageuse en ce que l'on a supprimé dans le poste d'encollage, c'est-à-dire le poste en aval des moyens de fibrage par rapport au trajet des fibres, un étage de refroidissement. Les inventeurs ont pu noter que les fibres passant dans un tel poste d'encollage avec un étage de refroidissement en moins sont en sortie du poste d'encollage, c'est-à-dire vers un poste de réticulation, en parfaite condition pour cette opération de réticulation.

Dans une telle installation, le dispositif annulaire de projection peut être agencé de sorte que le premier circuit de distribution, associé à la composition d'encollage, soit disposé en aval du trajet des fibres par rapport au deuxième circuit de distribution, associé à l'air comprimé.

L'invention concerne également une méthode de fabrication de laine minérale, mise en œuvre par une installation de fabrication de laine minérale qui vient d'être décrite, au cours de laquelle on réalise au moins les étapes suivantes :
- on amène du verre fondu dans un poste de fibrage,
- on crée des fibres de verre dans ce poste de fibrage, de manière à ce que ces fibres de verre prennent la forme d'un faisceau de fibres dirigé vers un poste d'encollage,
- on lie dans le poste d'encollage les fibres du faisceau entre elles par ajout d'une composition d'encollage, les fibres du faisceau étant liées directement à leur entrée dans le poste d'encollage sans qu'une couronne de refroidissement soit agencée dans le poste d'encollage,
- et on transforme par chauffage le matelas de fibres encollées entre elles obtenu précédemment pour former la laine minérale.

Plus particulièrement, la méthode de fabrication de laine minérale peut comprendre une étape de création de fibres de verre par un effet de centrifugation appliqué à du verre fondu, les filaments de verre formés par centrifugation étant étirés pour former un tore de fibres sous l'effet d'une projection d'un courant gazeux à grande vitesse et à température suffisamment élevée.

On peut noter que, dans la méthode de fabrication selon l'invention, la composition d'encollage est projetée sur le faisceau de fibres par la projection d'une composition d'encollage, sans que celle-ci soit associée à une étape spécifique de refroidissement en amont ou en aval de la projection de liant dans le poste d'encollage. Il est à noter que, dans la méthode de fabrication de laine minérale selon l'invention, d'une part le faisceau de fibres formé par soufflage du courant gazeux à température élevée reçoit une projection de composition d'encollage sans qu'il soit nécessaire de former un étage spécifique de refroidissement préalable, et d'autre part le faisceau de fibres encollées atteint le poste de réticulation sans qu'il soit nécessaire de former un étage spécifique de refroidissement entre le poste d'encollage et le poste de réticulation.

D'autres caractéristiques, détails et avantages de la présente invention ressortiront plus clairement à la lecture de la description détaillée donnée ci-après à titre indicatif, en relation avec les différents exemples de réalisation de l'invention illustrés sur les figures suivantes :
- la figure 1 est une représentation schématique d'une partie d'une installation de fabrication de laine minérale, illustrant notamment le poste d'encollage dans lequel une composition d'encollage est pulvérisée sur un tore de fibres ;
- la figure 2 est une vue de face du dispositif d'encollage représenté schématiquement sur la figure 1, en prise autour d'une hotte d'un poste de fibrage dans lequel on obtient les fibres à encoller ;
- la figure 3 est une vue de face d'une moitié du dispositif d'encollage de la figure 2;
- la figure 4 est une vue de détail de la figure 3, illustrant plus particulièrement deux buses de pulvérisation du dispositif d'encollage afin de rendre visible leur orientation différente, un jet de liant tel que pulvérisé par ces buses étant représenté schématiquement ;
- les figures 5 et 6 sont des vues en coupe d'une buse de pulvérisation selon les plans de coupe V-V et VI-VI représentés sur la figure 4 ;
- et la figure 7 est une vue en coupe partielle d'un exemple de réalisation de buse de pulvérisation et des circuits de distribution sur lesquels elle est rapportée.

L'invention porte sur un agencement particulier de buses de pulvérisation de liant sur un tore de fibres de verre, et notamment spécifique en ce que, dans une pluralité de buses agencées en série autour du passage de ce tore de fibres, deux buses voisines de cette série sont configurées pour projeter du liant sur le tore de fibres avec un angle de pulvérisation différent l'une de l'autre. Tel que cela sera décrit ci-après, ceci permet d'avoir un agencement dans lequel les buses sont proches l'une de l'autre, pour améliorer le recouvrement entre les zones de nébulisation, sans que cela génère pour autant des problèmes de coalescence des gouttes.

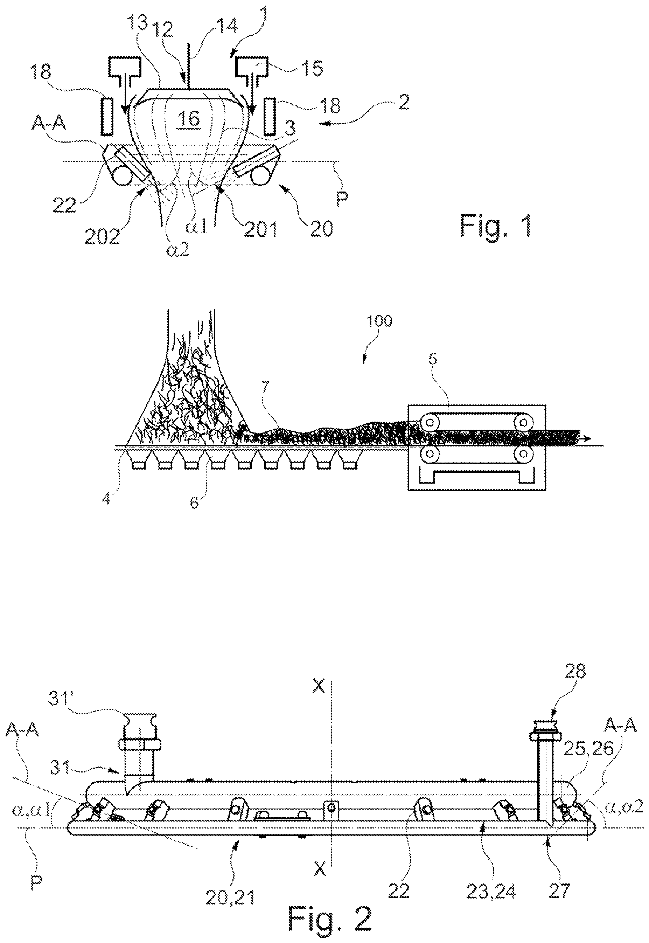

On a illustré sur la figure 1 une partie d'une installation de fabrication 100 de laine minérale, et plus particulièrement de laine de verre, et plus particulièrement différents postes successifs participant à la création d'un matelas isolant composé de fibres de verres encollées composant un matériau isolant de type laine minérale, par exemple laine de verre. Un premier poste, dit poste de fibrage 1, consiste en l'obtention de fibres par l'intermédiaire d'une assiette de centrifugation, en aval de laquelle se trouve un deuxième poste, dit poste d'encollage 2, dans lequel on réalise principalement l'encollage des fibres 3 préalablement obtenues pour les lier entre elles.

Les fibres encollées se posent dans un poste de formage sur un tapis de convoyage 4, qui les emmène vers une étuve formant un poste de réticulation 5 et à l'intérieur de laquelle elles sont chauffées pour réticuler le liant.

Le tapis de convoyage 4 est perméable aux gaz et à l'eau, et il s'étend au-dessus de caissons d'aspiration 6 des gaz tels que l'air, les fumées et les compositions aqueuses excédentaires issues du processus de fibrage précédemment décrit. Il se forme ainsi sur le tapis de convoyage 4 un matelas 7 de fibres de laine de verre mélangées intimement avec la composition d'encollage. Le matelas 7 est conduit par le tapis de convoyage 4 jusqu'à l'étuve formant le poste de réticulation 5 du liant, qui peut à titre d'exemple être ici un liant thermodurcissable.

On comprend qu'une telle ligne d'installation est adaptée pour la production de produits à base de fibres de laine de verre, tel que cela va être décrit, mais qu'elle est évidemment adaptée à la production de produits à base de fibres minérales.

Le poste de fibrage 1 est ici configuré pour la mise en œuvre d'un procédé de fibrage par centrifugation interne. On comprendra que tout type de centrifugation et de centrifugeur associé peut être mis en oeuvre avec les enseignements qui vont suivre dès lors que des fibres sont obtenues en sortie du centrifugeur pour leur passage à venir dans le poste d'encollage.

A titre d'exemple illustré sur la figure 1, le verre fondu peut être amené en un filet 14 depuis un four de fusion et d'abord récupéré dans un centrifugeur 12, pour ensuite s'échapper sous la forme d'une multitude de filaments entraînés en rotation. Le centrifugeur 12 est par ailleurs entouré par un brûleur annulaire 15 qui crée à la périphérie de la paroi du centrifugeur un courant gazeux à grande vitesse et à température suffisamment élevée pour étirer les filaments de verre en fibres sous la forme d'un tore 16.

On comprend que l'exemple de poste de fibrage donné ci-dessus est indicatif et non limitatif de l'invention, et que l'on pourra prévoir aussi bien un procédé de fibrage par centrifugation interne avec un panier et une paroi de fond trouée, ou avec une assiette avec un fond plein, dès lors que le verre fondu s'étire par centrifugation pour s'étendre par la suite sous forme de tore de fibres 16 dans le poste d'encollage.

Par ailleurs, on pourra prévoir d'autres variantes non limitatives de l'invention pour ce poste de fibrage, et notamment des moyens alternatifs ou cumulatifs par rapport au bruleur annulaire, et par exemple des moyens de chauffage 18, par exemple du type inducteur, servant à maintenir le verre et le centrifugeur à la bonne température.

Le tore de fibres 16 ainsi créé est entouré par un dispositif annulaire de projection d'une composition d'encollage, dénommé par la suite dispositif d'encollage 20, dont seuls deux buses de pulvérisation 22 sont représentées sur la figure 1.

On va maintenant décrire plus en détails le dispositif annulaire de projection, ou dispositif d'encollage 20, agencé dans le poste d'encollage 2, notamment en se référant aux figures 2 à 7.

Le dispositif d'encollage 20 comporte une couronne annulaire 21, présentant une forme générale de révolution autour d'un axe de révolution X-X. La couronne 21 comporte deux circuits de distribution distincts décalés d'une distance d le long de l'axe de révolution X-X et une pluralité de buses de pulvérisation 22 agencées entre ces deux circuits de distribution et configurées pour assurer une communication fluidique avec les circuits de distribution. On saura décrire par la suite des variantes relatives au nombre de circuits de distribution de la couronne et/ou à la circulation de fluide dans ces circuits distribution.

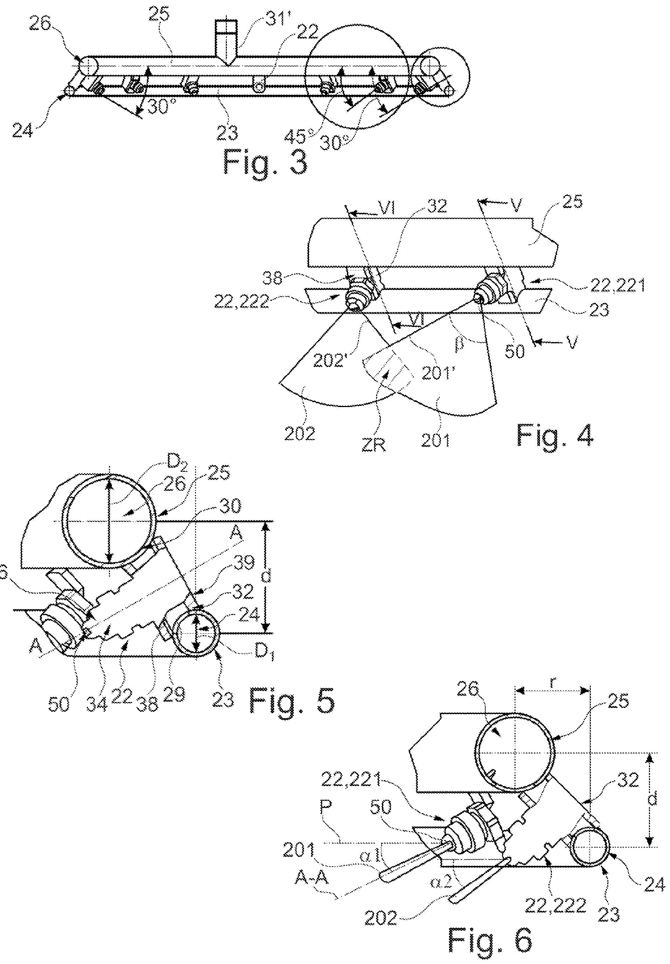

Dans l'exemple illustré, la couronne annulaire comporte notamment un premier tube annulaire 23 à l'intérieur duquel un premier conduit de distribution 24 (visible sur les figures 5 à 7 notamment) est ménagé pour permettre une circulation d'une composition d'encollage, ainsi qu'un deuxième tube annulaire 25, qui s'étend selon un plan de révolution, perpendiculaire à l'axe de révolution X-X de la couronne annulaire 21, et parallèle au plan de révolution du premier tube annulaire 23. On définit pour la suite un plan de révolution P du dispositif annulaire de projection comme étant l'un ou l'autre des plans de révolution tels qu'ils viennent d'être décrits, ou à tout le moins un plan parallèle à ceux-ci.

A l'intérieur de ce deuxième tube annulaire 25, un deuxième conduit de distribution 26 (également visible sur les figures 5 à 7) est ménagé pour permettre une circulation d'air comprimé, susceptible de projeter la composition d'encollage sur les fibres passant à travers le dispositif d'encollage 20.

Le premier tube annulaire 23 présente une forme tubulaire dont la paroi interne, délimitant le premier conduit de distribution 24, présente une section constante, ou sensiblement constante sur tout le pourtour du tube. Par section sensiblement constante, on entend une section qui reste la même avec une marge d'écartement inférieur à 5%. A titre d'exemple indicatif, la section moyenne du premier tube annulaire peut avoir un diamètre D1 compris entre 10mm et 30mm.

Le premier tube annulaire 23 comporte une unique zone d'alimentation 27 dans laquelle est rapporté un tuyau d'alimentation 28 d'une composition d'encollage, relié à son autre extrémité à un réservoir de cette composition d'encollage ici non représenté et dans lequel est réalisé un mélange d'eau et de colle.

Le tuyau d'alimentation 28 d'une composition d'encollage est agencé parallèlement à l'axe de révolution de la couronne annulaire de distribution, mais on comprend que l'on pourrait agencer différemment cette alimentation en composition d'encollage sans sortir du contexte de l'invention. Il convient toutefois de noter que selon une caractéristique de l'invention, la composition d'encollage est injectée dans le premier conduit de distribution du premier tube annulaire via une zone d'alimentation unique, la composition d'encollage étant destinée par ailleurs à circuler sur tout le pourtour du premier conduit de distribution.

Le premier tube annulaire 23 délimitant le premier conduit de distribution 24 comporte également une pluralité d'orifices de sortie 29 (visibles sur les figures 5 à 7 notamment), régulièrement répartis sur tout le pourtour du premier tube annulaire. Tel que cela sera décrit plus en détails ci-après, chacun de ces orifices de sortie débouche sur une buse de pulvérisation 22 agencée pour être en communication fluidique avec le premier conduit de distribution 24 via l'orifice de sortie correspondant.

Il résulte de ce qui précède que le premier tube annulaire 23 est consacré à la distribution d'une composition d'encollage en direction des buses de pulvérisation 22.

Par ailleurs, le deuxième tube annulaire 25 présente une forme tubulaire dont la paroi interne, délimitant le deuxième conduit de distribution 26, présente une section constante, ou sensiblement constante sur tout le pourtour du tube. Par section sensiblement constante, on entend une section qui reste la même avec une marge d'écartement inférieur à 5%. A titre d'exemple indicatif, la section moyenne du deuxième tube annulaire peut avoir un diamètre D2 compris entre 30mm et 50mm.

Conformément au premier tube annulaire, le deuxième tube annulaire 25 comporte une unique zone d'alimentation 31 dans laquelle est rapporté un raccord d'alimentation 31' pour une arrivée d'air comprimé.

Le raccord d'alimentation 31' en air comprimé est agencé parallèlement à l'axe de révolution de la couronne annulaire de distribution et parallèlement au tuyau d'alimentation 28 d'une composition d'encollage, mais on comprend que l'on pourrait agencer différemment cette alimentation en air comprimé sans sortir du contexte de l'invention. Il convient toutefois de noter que selon une caractéristique de l'invention, l'air comprimé est injecté dans le deuxième conduit de distribution du deuxième tube annulaire via une zone d'alimentation unique, l'air comprimé étant destinée par ailleurs à circuler sur tout le pourtour du deuxième conduit de distribution.

Le deuxième tube annulaire 25 délimitant le deuxième conduit de distribution 26 comporte également une pluralité d'orifices de sortie 30 (visibles sur les figures 5 à 7), régulièrement répartis sur tout le pourtour du deuxième tube annulaire. Conformément à ce qui a pu être décrit pour le premier tube annulaire 23, chacun de ces orifices de sortie débouche sur une buse de pulvérisation 22 agencée pour être en communication fluidique avec le deuxième conduit de distribution 26 via l'orifice de sortie correspondant, chacune des buses de pulvérisation 22 du dispositif d'encollage 20 étant en communication fluidique d'une part avec le premier conduit de distribution 24 et d'autre part avec le deuxième conduit de distribution 26.

Il résulte de ce qui précède que le deuxième tube annulaire 25 est consacré à la distribution d'air comprimé en direction des buses de pulvérisation 22.

Tel que cela est visible sur les figures 2 et 3 notamment, ce deuxième tube annulaire 25, délimitant le deuxième conduit de distribution 26 dédié à la circulation d'air comprimé, est disposé au-dessus du premier tube annulaire 23, délimitant le premier conduit de distribution 24 dédié à la circulation de la composition d'encollage. Pour la bonne compréhension du terme au-dessus, on se réfère à la position du dispositif d'encollage dans l'installation. Le deuxième tube annulaire 25 disposé au-dessus du premier tube annulaire 23 est disposé au plus près de l'assiette de centrifugation duquel tombent les fibres, de sorte que ces fibres formant le tore 16 sont amenées à passer tout d'abord à travers le tube annulaire délimitant le conduit dédié à l'air comprimé.

Le diamètre de l'anneau que forme le premier tube autour de l'axe de révolution de la couronne annulaire est supérieur au diamètre correspondant du deuxième tube, de sorte que ces deux tubes annulaires sont agencés l'un au-dessus de l'autre avec un décalage radial r pour que le deuxième tube annulaire soit plus à l'intérieur que le premier tube annulaire. Il en résulte une orientation inclinée, par rapport à l'axe de révolution de la couronne annulaire, des buses de pulvérisation 22 qui sont solidaires de chacun des deux tubes annulaires. Tel que cela sera décrit ci-après, les buses de pulvérisation sont fixées sur les tubes annulaires de sorte que leur angle d'inclinaison par rapport à l'axe de révolution peut varier d'une buse à l'autre.

Les premier et deuxième tubes annulaires sont configurés de sorte que leur paroi interne délimitant respectivement les premier et deuxième conduits de distribution présente une section moyenne différente l'une de l'autre. Notamment la paroi interne du deuxième tube définit une section moyenne de diamètre D2 supérieur au diamètre D1 de la section moyenne de la paroi interne du deuxième tube annulaire. La section de passage pour la composition d'encollage est de la sorte plus petite que la section de passage pour l'air comprimé. Une telle caractéristique permet de s'assurer du fait que le premier conduit de distribution, plus étroit, est constamment rempli de la composition d'encollage et qu'il n'y pas de défaut d'alimentation des buses de pulvérisation. Par ailleurs, le fait de dimensionner petitement le premier conduit de distribution permet d'accélérer la vitesse de déplacement de la composition d'encollage dans ce premier conduit et donc de prévenir d'un éventuel encrassement du premier tube annulaire.

Il résulte également de cette différence de diamètre interne des tubes annulaires une différence de diamètre externe de ces tubes, de sorte qu'un plus gros tube est prévu pour l'arrivée d'air que pour l'arrivée de la composition d'encollage. Dans l'exemple illustré, le plus gros tube se retrouve au-dessus du plus petit tube et des brides de fixation, ici non représentées, pour la fixation de la couronne dans le poste d'encollage peuvent être rapportées notamment sur le plus gros tube. On comprend que les tubes pourraient être agencés différemment l'un par rapport au l'autre sans que cela sorte du contexte de l'invention, avec notamment le tube d'arrivée d'air qui pourrait être situé en dessous du plus petit tube prévu pour la composition d'encollage.

Tel qu'illustré sur les figures 2 à 7 notamment, les tubes annulaires 23, 25 formant la conduite annulaire 21 sont agencés l'un au-dessus de l'autre de telle sorte que les premiers orifices de sortie du premier conduit de distribution et les deuxièmes orifices de sortie du deuxième conduit de distribution se superposent axialement, c'est-à-dire qu'ils sont répartis angulairement de la même façon autour de l'axe de révolution correspondant du conduit.

De la sorte, la buse de pulvérisation 22 qui met en communication fluidique un premier orifice de sortie du premier conduit de distribution avec un deuxième orifice de sortie du deuxième conduit de distribution, s'étend axialement, c'est-à-dire dans un plan comprenant l'axe de révolution X-X de la couronne annulaire.

Tel que notamment illustré sur les figures 5 à 7, la buse de pulvérisation 22 comporte un corps 32 qui s'étend entre les deux tubes annulaires, une buse liquide 34 qui s'étend en travers de ce corps 32 selon un axe d'orientation A-A et à l'extrémité libre de laquelle est disposé une tête de pulvérisation, ou cap à air, 36 configurée pour permettre la nébulisation de la composition d'encollage selon un jet de forme spécifique, ici plat.

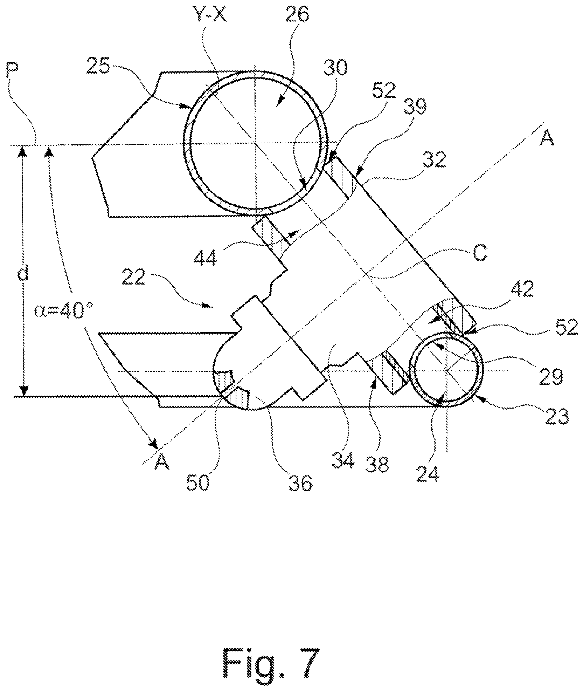

Le corps 32 présente une forme cylindrique, ici de section rectangulaire, comportant deux canaux internes de sorte que le corps peut recevoir d'une part la composition d'encollage provenant du premier conduit de distribution 24 via un premier orifice de sortie 29, et d'autre part l'air comprimé provenant du deuxième conduit de distribution 26 via un deuxième orifice de sortie 30. Le corps 32 est ainsi défini par un axe d'allongement Y-Y qui s'étend d'un tube annulaire à l'autre. Dans la configuration illustrée sur la figure 7, la buse de pulvérisation 22 est configurée de sorte que l'axe d'allongement Y-Y est confondu avec une droite passant par le centre de chacun des tubes annulaires et il en résulte un angle α entre l'axe d'orientation A-A de la buse liquide 34 et le plan de révolution P du dispositif annulaire de projection égal ici à 40°.

Le corps 32 de chaque buse de pulvérisation 22 est soudé sur les tubes annulaires, une fois que ses extrémités sont mises en regard des orifices de sortie ménagés dans chacun des tubes.

Une première face 38 du corps 32 est orientée vers l'intérieur de la couronne annulaire et son axe de révolution X-X et une deuxième face 39 est orientée à l'opposée. Le corps comporte en son centre, transversalement à l'axe d'allongement Y-Y du corps, un fourreau de réception de la buse liquide 34 débouchant à chaque extrémité sur l'une des première et deuxième faces du corps 32. Le fourreau s'étend sensiblement au centre du corps, c'est-à-dire à équidistance du premier tube annulaire 23 et du deuxième tube annulaire 25. Le fourreau est percé de manière à communiquer avec un premier canal interne 42, communiquant avec le premier orifice de sortie 29 et s'étendant parallèlement à l'axe d'allongement Y-Y du corps 32. Ces canaux internes sont configurés pour amener séparément l'air comprimé et la composition d'encollage à proximité de la tête de pulvérisation 36.

La tête de pulvérisation 36 présente une forme bombée définissant une chambre de mélange en sortie de la buse liquide 34, dans laquelle l'air comprimé et la composition d'encollage se mélangent pour former les gouttes amenées à être projetées via une fente de pulvérisation 50 ménagée dans la tête de pulvérisation.

On comprend que la buse de pulvérisation 22 est configurée pour permettre une communication fluidique entre le premier conduit de distribution 24 du tube annulaire 23 et/ou le deuxième conduit de distribution 26 du tube annulaire 25, et que la fente de pulvérisation 50, par laquelle le liant à base de produits biosourcés sort du dispositif annulaire de projection, est configurée pour la projection d'un spray d'encollage sur le tore de fibres et la dispersion de ce spray sur une plage angulaire déterminé.

La fente de pulvérisation 50 est centrée sur l'axe d'orientation A-A de la buse de pulvérisation, c'est-à-dire sur l'axe de la tige creuse 46 définissant la conduite de circulation de la composition d'encollage à l'intérieur du corps du nébuliseur, et on comprend que l'axe d'orientation A-A de la buse de pulvérisation définit la direction principale de projection selon laquelle la composition d'encollage va être projetée en sortie de la buse de pulvérisation.

Tel que cela est visible sur la figure 5 notamment, la fente de pulvérisation présente une section rectangulaire, formant une buse à jet plat, de sorte que dans la direction principale de projection, la composition d'encollage est projetée selon un angle d'ouverture déterminé par la longueur de la section rectangulaire. L'angle d'ouverture du jet plat ainsi formé est compris entre 30 et 120°.

La tête de pulvérisation 36 est orientée de sorte que la longueur de la fente rectangulaire 50 est perpendiculaire au plan passant par l'axe de révolution X-X de la couronne annulaire et par l'axe d'orientation A-A de la buse de pulvérisation, et parallèle au plan de révolution du dispositif annulaire de projection et donc de chaque tube annulaire de ce dispositif.

Le fonctionnement du dispositif d'encollage équipé d'au moins une buse de pulvérisation telle qu'elle vient d'être décrit est le suivant. Des moyens de contrôle appropriés permettent de piloter l'arrivée de la composition d'encollage à l'intérieur du premier conduit de distribution via le tuyau d'alimentation 28. La composition d'encollage est poussée pour circuler sur tout le pourtour du tube annulaire délimitant ce premier conduit de distribution, et pour circuler vers chacun des premiers orifices 29 communiquant avec la buse de pulvérisation 22. La composition d'encollage pénétrant dans la buse de pulvérisation 22 passe à l'intérieur de la buse liquide 34 via le fourreau 40 et est poussée vers la tête de pulvérisation 36 et la chambre de mélange.

Simultanément, des moyens de contrôle appropriés permettent de piloter l'arrivée d'air comprimé, à un débit et à une pression souhaités, à l'intérieur du deuxième conduit de distribution via le raccord d'alimentation 31'. Le débit et la pression de l'air sont notamment déterminés en fonction du dosage de la composition d'encollage. L'air comprimé est poussé pour circuler sur tout le pourtour du tube annulaire délimitant ce deuxième conduit de distribution, et pour circuler vers chacun des deuxièmes orifices communiquant avec la buse de pulvérisation 22. L'air comprimé pénétrant dans la buse de pulvérisation 22 est poussé dans les conduites de circulation 48 en périphérie de la buse liquide 34 vers la tête de pulvérisation 36 et la chambre de mélange, dans laquelle le mélange de l'air comprimé et de la composition d'encollage participe à la nébulisation du liant, le contrôle du débit d'air en fonction de la quantité de liant projeté permettant notamment de jouer sur la taille des gouttes.

On comprend que le fonctionnement du dispositif d'encollage tel qu'il vient d'être décrit, et l'intérêt de l'orientation spécifique d'au moins deux buses par rapport au plan de révolution du dispositif, seront les mêmes indifféremment du type de jet, par exemple plat ou conique, de composition d'encollage. La fente de pulvérisation équipant chaque buse pourra ainsi présenter une section rectangulaire, participant à former une buse à jet plat, tel que cela a été illustré, ou bien une section circulaire, participant à former une buse à jet conique.

On va maintenant décrire plus en détails l'agencement spécifique des buses de pulvérisation selon l'invention, et notamment l'inclinaison variable d'au moins deux de ces buses sur le pourtour de la couronne annulaire.

Tel que cela est illustré sur les figures 2 à 6 notamment, le dispositif d'encollage selon l'invention comporte une pluralité de buses de pulvérisation, agencées sur le pourtour de la couronne annulaire. Ces buses sont réparties angulairement régulièrement sur tout le pourtour de la couronne. On comprend que selon les modes de réalisation de l'invention, le nombre de buses, et donc l'écartement angulaire entre deux buses voisines, peut varier d'un dispositif d'encollage à l'autre. Sur la figure 2, le dispositif d'encollage comporte une série de seize buses de pulvérisation, de sorte que l'écartement angulaire entre deux buses successives de la série est de 22,5°.

Ces buses sont agencées à un même niveau axial, c'est à dire chacune agencée entre le premier tube annulaire et le deuxième tube annulaire, de sorte que le corps de chaque buse est centré sur un même plan perpendiculaire à l'axe de révolution de la couronne annulaire. En d'autres termes, on peut dire que les buses de pulvérisation sont configurées de sorte que leur corps, c'est-à-dire leur jonction avec chacun des tubes annulaires, s'étendent à la même hauteur.

Sur les figures, et notamment sur les figures 2 à 6, on a illustré un exemple de réalisation dans lequel toutes les buses de pulvérisation sont de conception identique, de sorte que les buses ne diffèrent que par l'inclinaison de leur axe d'orientation A-A. On comprendra que sans sortir du contexte de l'invention, les buses de pulvérisation pourraient différer dans leur conception, dès lors qu'au moins deux buses de pulvérisation s'étendant à la même hauteur présentent des inclinaisons différentes de l'une à l'autre.

Selon l'invention, au moins deux buses de pulvérisation consécutivement agencées sur le pourtour de la couronne, c'est-à-dire deux buses de pulvérisation voisines telles qu'illustrées sur la figure 4, sont disposées de manière à ce que l'axe d'orientation A-A, et donc son canal de sortie, de l'une de ces deux buses présente un angle par rapport au plan de révolution de la couronne différent de celui présenté par l'autre des deux buses.

Dans l'exemple illustré, on distingue au moins deux ensembles de buses de pulvérisation, qui se distinguent par leur inclinaison par rapport au plan de révolution de la couronne. Les buses de pulvérisation d'un premier ensemble 221, tel que celle visible sur la figure 6, sont inclinées de sorte que l'axe d'orientation A-A forme avec le plan de révolution de la couronne annulaire un premier angle α1, ici égal à 30°. Et les buses de pulvérisation d'un deuxième ensemble 222, tel que celle visible sur la figure 6, sont inclinées de sorte que l'axe d'orientation A-A forme avec le plan de révolution de la couronne annulaire un deuxième angle α2, ici égal à 45°.

On comprend, du fait de la caractéristique de l'invention selon laquelle deux buses voisines présentent des inclinaisons différentes, que les buses de chacun de ces deux ensembles sont alternées sur tout le pourtour de la couronne annulaire, de sorte qu'une buse d'un premier ensemble 221 de buses de pulvérisation donnée ne soit pas voisine d'une buse faisant partie du même ensemble, c'est-à-dire ne soit pas voisine d'une buse présentant la même inclinaison par rapport au plan de révolution de la couronne annulaire. On alterne sur le pourtour une buse de pulvérisation 22 d'un premier ensemble 221 de buses, une buse de pulvérisation 22 d'un deuxième ensemble 222 de buses, puis de nouveau une buse de pulvérisation 22 d'un premier ensemble 221 de buses, etc...

On a illustré sur les figures 5 à 7 un exemple conforme à l'invention pour la réalisation des inclinaisons différentes d'une buse de pulvérisation à l'autre.

Dans chacun des deux cas illustrés, le centre C du fourreau ménagé dans le corps, et le centre de chacun des tubes annulaires sont alignés. Et le corps est pivoté autour de ce point central défini par le centre C du fourreau pour venir porter contre le tube annulaire correspondant dans une zone de contact 52 plus ou moins éloignée de l'axe vertical, c'est-à-dire l'axe parallèle à l'axe de révolution de la couronne annulaire et passant par le centre de ce tube. Il en résulte que le centre C du fourreau de chaque corps est sensiblement à la même position par rapport aux tubes annulaires d'un cas à l'autre, sans décalage axial relativement à l'axe de révolution X-X. En d'autres termes, les corps des buses de pulvérisation ayant des inclinaisons différentes sont disposés à un même niveau axial relativement à l'axe de révolution du dispositif annulaire de projection.

Dans un premier plan de coupe radial illustré sur la figure 5 et correspondant au plan de coupe V-V de la figure 4, on a illustré une buse de pulvérisation d'un premier ensemble 221 de buses. Le premier orifice de sortie du premier tube et le deuxième orifice de sortie sont écartés de l'axe vertical propre à chaque tube annulaire et il en résulte une première inclinaison du corps de la buse pour que ses extrémités viennent en recouvrement des deux orifices de sortie. Cette première inclinaison est égale à l'inclinaison d'angle α1 de l'axe d'orientation A-A de la buse de pulvérisation d'un premier ensemble 221 par rapport au plan de révolution, c'est-à-dire ici égale à 30°.

Dans un deuxième plan de coupe radial illustré sur la figure 6 et correspondant au plan de coupe VI-VI de la figure 4, on a illustré une buse de pulvérisation d'un deuxième ensemble 222 de buses. Le premier orifice de sortie du premier tube et le deuxième orifice de sortie sont plus proches de l'axe vertical propre à chaque tube annulaire qu'ils ne le sont dans le premier plan de coupe, et il en résulte une deuxième inclinaison du corps de la buse pour que ses extrémités viennent en recouvrement des orifices de sortie. Cette deuxième inclinaison est égale à l'inclinaison d'angle α2 de l'axe d'orientation A-A de la buse de pulvérisation du deuxième ensemble 222 par rapport au plan de révolution, c'est-à-dire ici égale à 45°.

Il convient de noter qu'une buse de pulvérisation d'un premier ensemble et une buse de pulvérisation d'un deuxième ensemble, et notamment deux buses consécutivement agencées sur le pourtour du dispositif annulaire de projection, présentent une forme identique, tel que cela peut être illustré sur les figures, et que ces buses ne se distinguent l'une de l'autre que par l'inclinaison du corps reliant les deux conduits de distribution et donc par l'inclinaison de leur canal de sortie.

Tel que cela est illustré sur la figure 1, il résulte de cette différence d'orientation des buses du premier ensemble 221 et des buses du deuxième ensemble 222 une différence de hauteur de projection des jets de liant sur le tore de fibres 16. Le liant projeté par les buses du premier ensemble 221 impactent ainsi les fibres plus tôt que le liant projeté par les buses du deuxième ensemble 222. De la sorte, le premier spray 201 projeté par une buse du premier ensemble 221 s'étend sur un plan décalé axialement par rapport au plan dans lequel s'étend le deuxième spray 202 projeté par une buse du deuxième ensemble 222 et les gouttes formées dans un spray ne rencontrent pas, ou à tout le moins dans des limites acceptables, des gouttes formées dans un spray voisin de sorte à supprimer ou à limiter un problème de coalescence de gouttes que la rencontre des sprays pourrait générer. On a représenté à titre d'exemple sur la figure 4 une zone de recouvrement axial ZR, dans laquelle des gouttes formées à une extrémité orthoradiale 201' du premier spray 201 passent au-dessus des gouttes formées à une extrémité orthoradiale 202' du deuxième spray 202. Dans cette zone de recouvrement, le décalage axial le long de l'axe de révolution X-X assure que les gouttes ne se rencontrent pas et ne risquent pas de se déformer. On peut ainsi agencer au plus près deux buses de pulvérisation voisines, dans la mesure où elles font partie d'ensembles de buses distinct, et donc aux orientations distinctes, de manière à former ces zones de recouvrement sans risque de modification des gouttes et de manière à pouvoir assurer une fonction de redondance nécessaire pour un encollage de tout le pourtour du tore de fibres en cas de disfonctionnement d'une des buses de pulvérisation. On comprend facilement, notamment en s'appuyant sur l'illustration de la figure 4, que dans la mesure où une buse de pulvérisation d'un premier ensemble 221 arrêterait de fonctionner, de l'encollant pourrait continuer d'être projeté dans la zone ZR par une buse voisine d'un deuxième ensemble 222, à une hauteur différente de celle à laquelle ladite zone ZR aurait été encollée par la buse du premier ensemble 221. C'est cette différence de hauteur de projection générée par les différences d'inclinaison des buses voisines qui permet d'éviter que le format des gouttes délivrées par ces deux buses voisines soit modifié si elles sont toutes les deux en état de fonctionner.

On comprend de ce qui précède qu'il convient selon l'invention que les buses de pulvérisation agencées sur un même niveau axial présentent des inclinaisons différentes les unes des autres par rapport au plan de révolution du dispositif annulaire de distribution, notamment, dans une situation préférée, en présentant une alternance dans ses inclinaisons, de sorte que sur le pourtour du dispositif annulaire de distribution, les sprays sont alternativement dirigés sur une position dite haute et sur une position dite basse, la position dite haute étant située en amont de la position dite basse sur le trajet des fibres passant dans le dispositif annulaire de distribution. Le décalage de projection le long du trajet des fibres permet d'éviter la perturbation d'un spray par le spray voisin, et l'obtention de ce décalage de projection par des buses de pulvérisation dont le corps de fixation à ou aux conduit(s) de distribution est située au même niveau axial permet de rendre compact le dispositif annulaire de distribution.

Un agencement conforme à l'invention peut être mis en œuvre dans le dispositif décrit et illustré précédemment, et peut également être mis en œuvre, sans sortir du contexte de l'invention, dans d'autres modes de réalisation de dispositifs. À titre d'exemple, on pourra prévoir que le dispositif comporte des buses de pulvérisation agencées directement sur un tube annulaire à l'intérieur duquel circule la colle, l'air étant apporté indépendamment pour chaque buse, sans qu'il soit nécessaire de prévoir un conduit de distribution d'air commun à chaque buse et donc des buses de pulvérisation agencées entre deux conduits tels qu'ils ont été décrits précédemment. Dès lors, un tel dispositif est conforme à l'invention en ce qu'il comporte un circuit de distribution de la composition d'encollage et une pluralité de buses de pulvérisation communiquant fluidiquement avec le circuit de distribution et réparties sur le pourtour du dispositif annulaire de projection pour projeter la composition d'encollage sur les fibres de verre destinées à passer à l'intérieur du dispositif annulaire de projection défini par un axe de révolution, chaque buse de pulvérisation comportant un canal de sortie pour la délivrance de la composition d'encollage qui est orienté vers l'intérieur du dispositif annulaire de projection avec un angle d'inclinaison déterminé par rapport au plan de révolution du dispositif, et en ce qu'il comporte par ailleurs au moins deux buses de pulvérisation consécutivement agencées sur le pourtour du dispositif annulaire de projection disposées de manière à ce que leur canal de sortie respectif présente un angle différent par rapport au plan de révolution du dispositif annulaire de projection.

Selon un autre exemple, on pourra prévoir que les buses de pulvérisation soient des buses dites « air-less », c'est-à-dire des buses fonctionnant sans apport d'air comprimé pour réaliser la projection d'encollant. Dans ce cas, il peut être prévu une première variante dans laquelle on conserve la structure du dispositif annulaire de projection avec les deux tubes annulaires agencés l'un au-dessus de l'autre selon l'axe de révolution et les buses de pulvérisation disposées respectivement entre ces deux tubes annulaires, et dans laquelle le deuxième tube annulaire a uniquement une fonction structurelle, sans servir de circuit de distribution. Seule une composition d'encollage circule dans le premier circuit de distribution formé par le premier tube annulaire, et aucun air n'est envoyé dans le deuxième tube annulaire. Il peut également être prévu une deuxième variante dans laquelle le dispositif annulaire de projection ne comporte qu'un tube annulaire sur lequel sont disposées les buses de pulvérisation, étant entendu que conformément à l'invention les buses de pulvérisation sont fixées sur ce tube annulaire unique de telle sorte que deux buses voisines présentent des orientations différentes par rapport au plan de révolution du dispositif annulaire de projection.

Selon un autre exemple, on pourra prévoir que les buses sont réparties en plus de deux ensembles, chaque ensemble étant comme précédemment caractérisé par des buses présentant un angle d'inclinaison spécifique. On pourra prévoir un premier ensemble défini par des buses présentant une inclinaison α égale à 15°, un deuxième ensemble défini par des buses présentant une inclinaison α égale à 30°, et un troisième ensemble défini par des buses présentant une inclinaison α égale à 45°. Comme précédemment, on évite ainsi de disposer côte à côte des buses présentant la même inclinaison et dont le jet risque d'être perturbé par le jet voisin

Dans ce qui précède, il a été fait mention à une composition d'encollage, et celle-ci peut par exemple consister en un liant phénolique ou un liant alternatif à faible teneur en formaldéhyde, de préférence même sans formaldéhyde, liants parfois qualifiés de «liants verts», notamment lorsqu'ils sont au moins partiellement issus d'une base de matière première renouvelable, en particulier végétale, notamment du type à base de sucres hydrogénés ou non.

De manière plus détaillée, il peut être prévu de distribuer via le premier conduit de distribution une composition d'encollage contenant :
(a) au moins un glucide choisi parmi les sucres réducteurs, les sucres non réducteurs, les sucres hydrogénés et un mélange de ceux-ci, et
(b) au moins un agent de réticulation du ou des glucides.

On entend ici par « agent de réticulation de glucides » un composé capable de réagir, éventuellement en présence d'un catalyseur, avec les glucides et de former avec ces derniers un réseau tridimensionnel au moins partiellement insoluble.

Par ailleurs, le terme « glucides » a ici un sens plus large qu'usuellement, car il englobe non seulement les glucides au sens stricte, c'est-à-dire les sucres réducteurs ou hydrates de carbone de formule C*ₙ*(H₂O)*ₚ* présentant au moins un groupe aldéhyde ou cétone (groupe réducteur), mais également les produits d'hydrogénation de ces hydrates de carbone où le groupe aldéhyde ou cétone a été réduit en alcool. Ce terme englobe également les sucres non-réducteurs constitués de plusieurs motifs glucidiques dont les carbones porteurs de l'hydroxyle hémi-acétalique sont impliqués dans les liaisons osidiques reliant les motifs entre eux.

Une composition d'encollage à base de glucides et d'agent de réticulation, de préférence de polyacides carboxyliques, qui peut être utilisée dans la présente invention est connue et décrite par exemple dans US 8197587, WO2010/029266, WO2013/014399, WO2015/181458, WO2012/168619, WO2012/168621, WO2012/072938.

Le composant glucidique peut être à base de sucres réducteurs, non réducteurs, de sucres hydrogénés exempt de sucres réducteurs ou non réducteurs, ou de leurs mélanges.

Les sucres réducteurs englobent les oses (monosaccharides) et osides (disaccharides, oligosaccharides et polysaccharides). A titre d'exemples de monosaccharides, on peut citer ceux comportant de 3 à 8 atomes de carbone, de préférence les aldoses et avantageusement les aldoses contenant 5 à 7 atomes de carbone. Les aldoses particulièrement préférés sont les aldoses naturels (appartenant à la série D), notamment les hexoses tels que le glucose, le mannose et le galactose. Le lactose ou le maltose sont des exemples de disaccharides utilisables en tant que sucre réducteur. Les polysaccharides utilisables pour la présente invention ont de préférence une masse molaire moyenne en poids inférieure à 100.000, de préférence inférieure à 50.000, avantageusement inférieure à 10.000. De préférence, le polysaccharide renferme au moins un motif choisi parmi les aldoses précités, avantageusement le glucose. Sont particulièrement préférés les polysaccharides réducteurs qui sont constitués majoritairement (à plus de 50 % en poids) de motifs de glucose.

Le sucre réducteur peut notamment être un mélange de monosaccharides, d'oligosaccharides et de polysaccharides, notamment une dextrine. Les dextrines sont des composés répondant à la formule générale (C₆H₁₀O₅)ₙ. Elles sont obtenues par hydrolyse partielle d'amidon. Leur équivalent dextrose (DE) est avantageusement compris entre 5 et 99, de préférence entre 10 et 80.

Le sucre non réducteur est de préférence un oligoholoside non réducteur renfermant au plus dix motifs glucidiques. A titre d'exemples de tels sucres non réducteurs, on peut citer les diholosides tels que le tréhalose, les isotréhaloses, le saccharose et les isosaccharoses (« isosucroses » en anglais), les triholosides tels que le mélézitose, le gentianose, le raffinose, l'erlose et l'umbelliférose, les tétraholosides tels que le stachyose, et les pentaholosides tels que le verbascose. On préfère le saccharose et le tréhalose, et mieux encore le saccharose.

Par « sucre hydrogéné » on entend dans la présente invention l'ensemble des produits résultant de la réduction d'un saccharide choisi parmi les monosaccharides, disaccharides, oligosaccharides et polysaccharides et des mélanges de ces produits. Le sucre hydrogéné est de préférence un produit d'hydrogénation d'un hydrolysat d'amidon (degré d'hydrolyse est généralement caractérisé par l'équivalent dextrose (DE), compris entre 5 et 99, et avantageusement entre 10 et 80). L'hydrogénation transforme le sucre ou le mélange de sucres (hydrolysat d'amidon) en polyols ou alcools de sucre.

A titre d'exemples de sucres hydrogénés, on peut citer l'érythritol, l'arabitol, le xylitol, le sorbitol, le mannitol, l'iditol, le maltitol, l'isomaltitol, le lactitol, le cellobitol, le palatinitol, le maltotritol et les produits d'hydrogénation d'hydrolysats d'amidon. De préférence, le sucre hydrogéné ou le mélange de sucres hydrogénés est constitué majoritairement, c'est-à-dire à plus de 50 % en poids, de maltitol (produit d'hydrogénation du maltose, dimère de glucose résultant de l'hydrolyse enzymatique de l'amidon).

Le composant (a), à savoir le glucide constitué de sucres hydrogénés et/ou de sucres réducteurs et/ou non-réducteurs, représente avantageusement de 30 à 70 % en poids, de préférence de 40 à 60 % en poids de matières sèches de la composition d'encollage. Ces valeurs s'entendent avant l'ajout d'additifs éventuels.

L'agent de réticulation, c'est-à-dire le composant (b), utilisé dans la présente invention est choisi de préférence parmi les acides polycarboxyliques, les sels et anhydrides d'acides polycarboxyliques, les amines, les sels métalliques d'acides minéraux, et les sels d'amines et d'ammonium d'acides minéraux, ainsi que les mélanges des composés précités.

Les acides minéraux sont par exemple l'acide sulfurique, l'acide phosphorique, l'acide nitrique et l'acide chlorhydrique. Les sels métalliques peuvent être les sels de métaux alcalins, alcalino-terreux et de transition.

Les acides minéraux et leur sels utilisables en tant qu'agent de réticulation dans la présente invention sont décrits par exemple dans les demandes WO2012/168619, WO2012/168621 et WO2012/072938.

Dans un mode de réalisation préféré, l'agent de réticulation comprend un acide polycarboxylique ou est un acide polycarboxylique. L'acide polycarboxylique peut être un acide polymère (c'est-à-dire obtenu par polymérisation de monomères carboxylés) ou un acide monomère.

Pour limiter la viscosité de la composition d'encollage, cet acide polycarboxylique présente avantageusement une masse molaire moyenne en nombre inférieure ou égale à 50000, de préférence inférieure ou égale à 10000 et avantageusement inférieure ou égale à 5000.

On peut citer à titre d'exemples d'acides polycarboxyliques polymères, les homopolymères et copolymères obtenus à partir de monomères portant au moins un groupe acide carboxylique tel que l'acide (méth)acrylique, l'acide crotonique, l'acide isocrotonique, l'acide maléique, l'acide cinnamique, l'acide 2-méthylmaléique, l'acide fumarique, l'acide itaconique, l'acide 2-méthylitaconique, l'acide a,b-méthylèneglutarique et les monoesters d'acide dicarboxylique insaturés, tels que les maléates et les fumarates d'alkyle en Ci-Cio. Les copolymères peuvent contenir en outre un ou plusieurs monomères vinyliques ou acryliques tels que l'acétate de vinyle, le styrène substitué ou non par des groupements alkyle, hydroxyle ou sulfonyle, ou par un atome d'halogène, le (méth)acrylonitrile, le (méth)acrylamide, les (méth)acrylates alkyle en Ci-Cio, notamment le (méth)acrylate de méthyle, le (méth)acrylate d'éthyle, le (méth)acrylate de n-butyle et le (méth)acrylate d'isobutyle.

Dans un mode de réalisation particulièrement préféré, le composant (b) est ou comprend un acide polycarboxylique monomère. On entend par acide polycarboxylique monomère un acide polycarboxylique qui ne résulte pas de la polymérisation de monomères carboxylés. Un polyacide carboxylique monomère ne comporte donc pas un enchaînement de motifs récurrents.

Il peut s'agir d'un acide dicarboxylique, tricarboxylique ou tetracarboxylique.

Les acides dicarboxyliques englobent, par exemple, l'acide oxalique, l'acide malonique, l'acide succinique, l'acide glutarique, l'acide adipique, l'acide pimélique, l'acide subérique, l'acide azelaïque, l'acide sébacique, l'acide malique, l'acide tartrique, l'acide tartronique, l'acide aspartique, l'acide glutamique, l'acide fumarique, l'acide itaconique, l'acide maléique, l'acide traumatique, l'acide camphorique, l'acide phtalique et ses dérivés, notamment contenant au moins un atome de bore ou de chlore, l'acide tétrahydrophtalique et ses dérivés, notamment contenant au moins un atome de chlore tel que l'acide chlorendique, l'acide isophtalique, l'acide téréphtalique, l'acide mésaconique et l'acide citraconique.

Les acides tricarboxyliques englobent, par exemple, l'acide citrique, l'acide tricarballylique, l'acide 1,2,4-butanetricarboxylique, l'acide aconitique, l'acide hémimellitique, l'acide triméllitique et l'acide trimésique. On peut citer comme acide tétracarboxylique, par exemple l'acide 1,2,3,4-butanetétracarboxylique et l'acide pyroméllitique.

On utilisera de préférence l'acide citrique.

Le composant (b) représente avantageusement de 30 à 70 % en poids, de préférence de 40 à 60 % en poids de matières sèches de la composition d'encollage de la présente invention. Ces valeurs s'entendent avant l'ajout d'additifs éventuels.

Le rapport en poids du composant (a) au composant (b) est de préférence compris entre 70/30 et 30/70, en particulier entre 60/40 et 40/60.

La composition d'encollage peut comprendre en outre un catalyseur qui peut être choisi par exemple parmi les bases et les acides de Lewis, tels que les argiles, la silice colloïdale ou non colloïdale, les oxydes métalliques, les sulfates d'urée, les chlorures d'urée et les catalyseurs à base de silicates. Un catalyseur d'estérification est préféré.

Le catalyseur peut également être un composé contenant du phosphore, par exemple un hypophosphite de métal alcalin, un phosphite de métal alcalin, un polyphosphate de métal alcalin, un hydrogénophosphate de métal alcalin, un acide phosphorique ou un acide alkylphosphonique. De préférence, le métal alcalin est le sodium ou le potassium.

Le catalyseur peut encore être un composé contenant du fluor et du bore, par exemple l'acide tétrafluoroborique ou un sel de cet acide, notamment un tétrafluoroborate de métal alcalin tel que le sodium ou le potassium, un tétrafluoroborate de métal alcalino-terreux tel que le calcium ou le magnésium, un tétrafluoroborate de zinc et un tétrafluoroborate d'ammonium.

De préférence, le catalyseur est l'hypophosphite de sodium, le phosphite de sodium ou un mélange de ces composés.

La quantité de catalyseur introduite dans la composition d'encollage représente généralement au plus 20 % en poids, avantageusement de 1 à 10 % en poids, rapporté au poids total des composants (a) et (b).

De manière générale, les modes de réalisation qui sont décrits ci-dessus ne sont nullement limitatifs : on pourra notamment imaginer des variantes de l'invention ne comprenant qu'une sélection de caractéristiques décrites par la suite isolées des autres caractéristiques mentionnées dans ce document, si cette sélection de caractéristiques est suffisante pour conférer un avantage technique ou pour différencier l'invention par rapport à l'état de la technique antérieur et si ces variantes sont couvertes par l'étendue de la protection définie par les revendications qui suivent.

## Revendications

1. Dispositif annulaire de projection (20) d'une composition d'encollage sur des fibres minérales (3), comportant au moins un circuit de distribution (24, 26) de ladite composition d'encollage et une pluralité de buses de pulvérisation (22) communiquant fluidiquement avec le circuit de distribution et réparties sur le pourtour du dispositif annulaire de projection pour projeter la composition d'encollage sur les fibres destinées à passer à l'intérieur du dispositif annulaire de projection défini par un axe de révolution (X-X), chaque buse de pulvérisation (22) étant orientée vers l'intérieur du dispositif annulaire de projection avec un angle d'inclinaison (a) déterminé par rapport au plan de révolution (P) du dispositif annulaire de projection, **caractérisé en ce qu'**au moins deux buses de pulvérisation (22, 221, 222) consécutivement agencées sur le pourtour du dispositif annulaire de projection sont disposées de manière à présenter une orientation par rapport au plan de révolution (P) du dispositif annulaire de projection d'un angle d'inclinaison (a) différent l'une de l'autre.

2. Dispositif annulaire de projection d'une composition d'encollage selon la revendication précédente, **caractérisé en ce que** ledit angle d'inclinaison (a) d'une buse de pulvérisation (22) par rapport au plan de révolution (P) est compris entre 0 et 80°.

3. Dispositif annulaire de projection d'une composition d'encollage selon l'une des revendications précédentes, **caractérisé en ce que** chaque buse (22) comporte un corps (32) de fixation rendu solidaire d'un tube annulaire (23, 25) délimitant l'au moins un circuit de distribution (24, 26), lesdites au moins deux buses de pulvérisation consécutivement agencées sur le pourtour du dispositif annulaire de projection (20) ayant des corps disposés à un même niveau axial relativement à l'axe de révolution (X-X) du dispositif annulaire de projection.

4. Dispositif annulaire de projection d'une composition d'encollage selon l'une des revendications précédentes, **caractérisé en ce qu'**il comporte une pluralité de buses de pulvérisation (22) et **en ce que** chaque buse est voisine de buses dont l'orientation par rapport au plan de révolution (P) du dispositif annulaire de projection (20) est différente de la sienne.

5. Dispositif annulaire de projection d'une composition d'encollage selon la revendication précédente, **caractérisé en ce que** les buses de pulvérisation (22) sont réparties en au moins deux ensembles, entre un premier ensemble (221) dans lequel chaque buse est configurée de sorte que l'orientation par rapport au plan de révolution (P) du dispositif annulaire de projection prend un premier angle d'inclinaison (**α1**) et un deuxième ensemble (222) dans lequel chaque buse est configurée de sorte que l'orientation par rapport au plan de révolution du dispositif annulaire de projection prend un deuxième angle d'inclinaison (**α2**) distinct du premier angle, les buses de pulvérisation étant agencées sur le pourtour du dispositif annulaire de projection (20) avec une alternance de buses du premier ensemble (221) et de buses du deuxième ensemble (222).

6. Dispositif annulaire de projection d'une composition d'encollage selon la revendication précédente, **caractérisé en ce que** les buses dudit premier ensemble (221) sont configurées de sorte qu'elles sont orientées par rapport au plan de révolution (P) du dispositif annulaire de projection avec un premier angle d'inclinaison (**α1**) compris entre 0° et 45° et **en ce que** les buses dudit deuxième ensemble (222) sont configurées de sorte qu'elles sont orientées par rapport au plan de révolution du dispositif annulaire de projection avec un deuxième angle d'inclinaison (**α2**) compris entre 25° et 80°.

7. Dispositif annulaire de projection d'une composition d'encollage selon l'une des revendications précédentes, **caractérisé en ce que** les au moins deux buses de pulvérisation (22, 221, 222) consécutivement agencées sur le pourtour du dispositif annulaire de projection (20) comportent une tête de pulvérisation (36) avec une fente (50) à section rectangulaire de manière à former un jet plat de composition d'encollage.

8. Dispositif annulaire de projection d'une composition d'encollage selon la revendication précédente, **caractérisé en ce que** la fente (50) à section rectangulaire est dimensionnée de sorte que le jet plat de composition d'encollage correspondant présente une ouverture angulaire (β) comprise entre 30° et 120°.

9. Dispositif annulaire de projection d'une composition d'encollage selon l'une des revendications précédentes, **caractérisé en ce que** le circuit de distribution (24, 26) de la composition d'encollage comporte une alimentation unique (27, 31) et une pluralité d'orifices (29, 30) communiquant respectivement avec une buse de pulvérisation (22).

10. Dispositif annulaire de projection d'une composition d'encollage selon l'une des revendications précédentes, **caractérisé en ce qu'**il comporte deux circuits de distribution (24, 26) distincts décalés le long de l'axe de révolution (X-X) du dispositif annulaire de projection (20), les buses de pulvérisation (22) étant agencées entre ces deux circuits de distribution de manière à être en communication fluidique avec chacun desdits circuits de distribution.

11. Dispositif annulaire de projection d'une composition d'encollage selon la revendication précédente, **caractérisé en ce qu'**un premier circuit de distribution (24) est configuré pour recevoir ladite composition d'encollage et un deuxième circuit de distribution (26) est configuré pour recevoir de l'air comprimé.

12. Dispositif annulaire de projection d'une composition d'encollage selon la revendication précédente, **caractérisé en ce que** le premier circuit de distribution (24) présente une section moyenne de diamètre inférieur au diamètre de la section moyenne du deuxième circuit de distribution (26).

13. Dispositif annulaire de projection d'une composition d'encollage selon l'une des revendications 11 ou 12, **caractérisé en ce qu'**il comporte des moyens de contrôle du débit d'air comprimé en fonction de la quantité de composition d'encollage à projeter sur les fibres.

14. Installation de fabrication de laine minérale (100), comportant des moyens de fibrage configurés pour amener des fibres de verre à l'intérieur d'un poste d'encollage (2) de ces fibres, **caractérisée en ce que** le poste d'encollage comporte uniquement un dispositif d'encollage formé par un dispositif annulaire de projection (20) d'une composition d'encollage conforme à l'une des revendications dépendantes, le dispositif annulaire étant agencé de manière à présenter un plan de révolution (P) sensiblement perpendiculaire à la direction de passage du tore de fibres à encoller.

15. Installation de fabrication de laine minérale selon la revendication précédente, dans lequel le dispositif annulaire de projection (20) est conforme à la revendication 11, **caractérisé en ce que** le dispositif annulaire de projection est agencé de sorte que le premier circuit de distribution (24), associé à la composition d'encollage, soit disposé en aval du trajet des fibres par rapport au deuxième circuit de distribution (26), associé à l'air comprimé.

16. Méthode de fabrication de laine minérale, mise en oeuvre par l'installation de fabrication de laine minérale (100) selon la revendication 14 ou 15, au cours de laquelle on réalise au moins les étapes suivantes :
- on amène du verre fondu dans un poste de fibrage,
- on crée des fibres de verre dans ce poste de fibrage, de manière à ce que ces fibres de verre prennent la forme d'un faisceau de fibres dirigé vers un poste d'encollage,
- on lie dans le poste d'encollage les fibres du faisceau entre elles par ajout d'une composition d'encollage, les fibres du faisceau étant liées directement à leur entrée dans le poste d'encollage sans qu'une couronne de refroidissement soit agencée dans le poste d'encollage,
- et on transforme par chauffage le matelas de fibres encollées entre elles obtenu précédemment pour former la laine minérale.

## Patentansprüche

1. Ringförmige Sprühvorrichtung (20) zum Aufsprühen einer Bindermittelzusammensetzung auf Mineralfasern (3), umfassend wenigstens einen Verteilerkreis (24, 26) der Bindermittelzusammensetzung und eine Vielzahl von Sprühdüsen (22), die mit dem Verteilerkreis in Fluidverbindung stehen und über den Umfang der ringförmigen Sprühvorrichtung verteilt sind, um die Bindermittelzusammensetzung auf die Fasern zu sprühen, die dazu bestimmt sind, innerhalb der ringförmigen Sprühvorrichtung zu durchtreten sollen, die durch eine Drehachse (X-X) definiert ist, wobei jede Sprühdüse (22) mit einem bestimmten Neigungswinkel (a) zur Drehebene (P) der ringförmigen Sprühvorrichtung in das Innere der ringförmigen Sprühvorrichtung gerichtet ist, **dadurch gekennzeichnet, dass** mindestens zwei am Umfang der ringförmigen Sprühvorrichtung aufeinanderfolgend angeordnete Sprühdüsen (22, 221, 222) so angeordnet sind, dass sie bezüglich der Drehebene (P) der ringförmigen Sprühvorrichtung mit einem voneinander unterschiedlichen Neigungswinkel (a) aufweisen.

2. Ringförmige Sprühvorrichtung zum Aufsprühen einer Bindermittelzusammensetzung nach dem vorhergehenden Anspruch, **dadurch gekennzeichnet, dass** der Neigungswinkel (a) einer Sprühdüse (22) zur Drehebene (P) zwischen 0 und 80° liegt.

3. Ringförmige Sprühvorrichtung zum Aufsprühen einer Bindermittelzusammensetzung nach einem der vorhergehenden Ansprüche, **dadurch gekennzeichnet, dass** jede Sprühdüse (22) einen Befestigungskörper (32) umfasst, der mit einem ringförmigen Rohr (23, 25) fest verbunden ist, das den mindestens einen Verteilerkreis (24, 26) begrenzt, wobei die mindestens zwei am Umfang der ringförmigen Sprühvorrichtung (20) aufeinanderfolgend angeordnete Sprühdüsen Körper aufweisen, die zur Drehachse (X-X) der ringförmigen Sprühvorrichtung auf derselben axialen Höhe angeordnet sind.

4. Ringförmige Sprühvorrichtung zum Aufsprühen einer Bindermittelzusammensetzung nach einem der vorhergehenden Ansprüche, **dadurch gekennzeichnet, dass** sie eine Vielzahl von Sprühdüsen (22) umfasst und dass jede Düse in der Nähe von Düsen liegt, deren Ausrichtung in Bezug auf die Drehebene (P) der ringförmigen Sprühvorrichtung (20) von ihrer eigenen unterschiedlich ist.

5. Ringförmige Sprühvorrichtung zum Aufsprühen einer Bindermittelzusammensetzung nach dem vorhergehenden Anspruch, **dadurch gekennzeichnet, dass** die Sprühdüsen (22) in mindestens zwei Sätzen verteilt sind zwischen einem ersten Satz (221), bei dem jede Düse so ausgebildet ist, dass die Ausrichtung zur Drehebene der ringförmigen Sprühvorrichtung einen ersten Neigungswinkel (α1) annimmt, und eine zweite Satz (222), bei jede Düse so ausgebildet ist, dass die Ausrichtung zur Drehebene der ringförmigen Sprühvorrichtung einen zweiten Neigungswinkel (α2) annimmt, die von dem ersten Winkel verschieden ist, wobei die Sprühdüsen am Umfang der ringförmigen Sprühvorrichtung (20) mit einem Wechsel von Düsen des ersten Satzes (221) und Düsen des zweiten Satzes (222) angeordnet sind.

6. Ringförmige Sprühvorrichtung zum Aufsprühen einer Bindermittelzusammensetzung nach dem vorhergehenden Anspruch, **dadurch gekennzeichnet, dass** die Düsen des ersten Satzes (221) so ausgebildet sind, dass sie zur Drehebene (P) der ringförmigen Sprühvorrichtung mit einem ersten Neigungswinkel (α1) zwischen 0° und 45° ausgerichtet sind und dass die Düsen des zweiten Satzes (222) so ausgebildet sind, dass sie zur Drehebene der ringförmigen Sprühvorrichtung mit einem zweiten Neigungswinkel (α2) zwischen 25° und 80° ausgerichtet sind.

7. Ringförmige Sprühvorrichtung zum Aufsprühen einer Bindermittelzusammensetzung nach einem der vorhergehenden Ansprüche, **dadurch gekennzeichnet, dass** die mindestens zwei am Umfang der ringförmigen Sprühvorrichtung aufeinanderfolgend angeordnete Sprühdüsen (22, 221, 222) eine Sprühkopf (36) mit einem Schlitz (50) mit rechteckigem Querschnitt aufweisen, um einen flachen Strahl aus Bindermittelzusammensetzung zu bilden.

8. Ringförmige Sprühvorrichtung zum Aufsprühen einer Bindermittelzusammensetzung nach dem vorhergehenden Anspruch, **dadurch gekennzeichnet, dass** der Schlitz (50) mit rechteckigem Querschnitt so dimensioniert ist, dass der flachen Strahl aus Bindermittelzusammensetzung eine Winkelöffnung (β) zwischen 30° und 120° aufweist.

9. Ringförmige Sprühvorrichtung zum Aufsprühen einer Bindermittelzusammensetzung nach einem der vorhergehenden Ansprüche, **dadurch gekennzeichnet, dass** der Verteilerkreis (24, 26) der Bindermittelzusammensetzung eine einzige Zuführung (27, 31) und eine Vielzahl von Öffnungen (29, 30) umfasst, die jeweils mit einer Sprühdüse (22) in Verbindung stehen.

10. Ringförmige Sprühvorrichtung zum Aufsprühen einer Bindermittelzusammensetzung nach einem der vorhergehenden Ansprüche, **dadurch gekennzeichnet, dass** sie zwei getrennte Verteilerkreise (24, 26) umfasst, die entlang der Drehachse (X-X) der ringförmigen Sprühvorrichtung (20) versetzt sind, wobei die Sprühdüsen (22) zwischen diesen beiden Verteilerkreisen so angeordnet sind, dass sie mit jedem der Verteilerkreisen in Fluidverbindung stehen.

11. Ringförmige Sprühvorrichtung zum Aufsprühen einer Bindermittelzusammensetzung nach dem vorhergehenden Anspruch, **dadurch gekennzeichnet, dass** ein erster Verteilerkreis (24) zur Aufnahme der Bindermittelzusammensetzung ausgebildet ist, und ein zweiter Verteilerkreis (26) zur Aufnahme von Druckluft ausgebildet ist.

12. Ringförmige Sprühvorrichtung zum Aufsprühen einer Bindermittelzusammensetzung nach dem vorhergehenden Anspruch, **dadurch gekennzeichnet, dass** der erste Verteilerkreis (24) einen mittleren Querschnitt mit einem Durchmesser aufweist, der kleiner ist als der Durchmesser des mittleren Querschnitts des zweiten Verteilerkreises (26).

13. Ringförmige Sprühvorrichtung zum Aufsprühen einer Bindermittelzusammensetzung nach einem der Ansprüche 11 oder 12, **dadurch gekennzeichnet, dass** sie Mittel zur Steuerung des Druckluftstroms in Abhängigkeit von der auf die Fasern zu sprühender Menge der Bindermittelzusammensetzung umfasst.

14. Anlage zur Herstellung von Mineralwolle (100) mit Faserziehmitteln, die so ausgebildet sind, dass sie Glasfasern in eine Binderestation (2) für diese Fasern bringen, **dadurch gekennzeichnet, dass** die Binderestation nur eine Bindervorrichtung umfasst, die durch eine ringförmige Sprühvorrichtung (20) zum Aufsprühen einer Bindermittelzusammensetzung nach einem der vorhergehenden Ansprüche gebildet ist, wobei die ringförmige Vorrichtung so angeordnet ist, dass sie eine Drehebene (P) aufweist, die im Wesentlichen senkrecht zur Durchlaufrichtung des Torus der zu schlichtenden Fasern ist.

15. Anlage zur Herstellung von Mineralwolle nach dem vorhergehenden Anspruch, wobei die ringförmige Sprühvorrichtung (20) nach Anspruch 11 ausgebildet ist, **dadurch gekennzeichnet, dass** die ringförmige Sprühvorrichtung so angeordnet ist, dass der erste Verteilerkreis (24), der der Bindermittelzusammensetzung zugeordnet ist, stromabwärts des Faserweges in Bezug auf den zweiten Verteilerkreis (26), der der Druckluft zugeordnet ist, angeordnet ist.

16. Verfahren zur Herstellung von Mineralwolle, das durch die Anlage zur Herstellung von Mineralwolle (100) nach Anspruch 14 oder 15 durchgeführt wird, wobei mindestens die folgenden Schritte durchgeführt werden:
- geschmolzenes Glas wird in eine Faserstation gebracht,
- in dieser Faserstation werden Glasfasern erzeugt, so dass diese Glasfasern die Form eines Faserbündels annehmen, das in Richtung einer Binderestation gerichtet ist;
- in der Binderestation werden Fasern des Bündels durch Zugabe einer Bindermittelzusammensetzung miteinander verbunden, wobei die Fasern des Bündels unmittelbar mit ihrem Eintritt in die Binderestation verbunden werden, ohne dass in der Binderestation ein Kühlkring angeordnet ist;
- und die zuvor erhaltene Matte aus miteinander verklebten Fasern wird durch Erhitzen zu Mineralwolle verarbeitet.

## Claims

1. Annular discharge device (20) for discharging a gluing composition onto mineral fibres (3), comprising at least one distribution circuit (24, 26) for distributing said gluing composition and a plurality of spray nozzles (22) fluidically connected with the distribution circuit and distributed over the perimeter of the annular discharge device for discharging the gluing composition onto the fibres intended to pass inside the annular discharge device defined by an axis of revolution (X-X), each spray nozzle (22) being oriented towards the interior of the annular discharge device with an angle of inclination (**α**) determined in relation to the plane of revolution (P) of the annular discharge device, **characterized in that** at least two spray nozzles (22, 221, 222) arranged consecutively on the perimeter of the annular discharge device are disposed so as to have an orientation with respect to the plane of revolution (P) of the annular discharge device each with a different angle of inclination (**α**) with respect to one another.

2. Annular discharge device for discharging a gluing composition according to the preceding claim, **characterized in that** said angle of inclination (**α**) of a spray nozzle (22) with respect to the plane of revolution (P) lies between 0 and 80°.

3. Annular discharge device for discharging a gluing composition according to one of the preceding claims, **characterized in that** each nozzle (22) comprises a fixing body (32) secured to an annular tube (23, 25) delimiting the at least one distribution circuit (24, 26), said at least two spray nozzles consecutively arranged on the perimeter of the annular discharge device (20) having bodies disposed at one and the same axial level in relation to the axis of revolution (X-X) of the annular discharge device.

4. Annular discharge device for discharging a gluing composition according to one of the preceding claims, **characterized in that** it comprises a plurality of spray nozzles (22) and **in that** each nozzle is adjacent to nozzles whose orientation with respect to the plane of revolution (P) of the annular discharge device (20) is different from its own.

5. Annular discharge device for discharging a gluing composition according to the preceding claim, **characterized in that** the spray nozzles (22) are divided up into at least two sets, between a first set (221) in which each nozzle is configured so that the orientation with respect to the plane of revolution (P) of the annular discharge device takes a first angle of inclination (**α1**) and a second set (222) in which each nozzle is configured so that the orientation with respect to the plane of revolution of the annular discharge device takes a second angle of inclination (**α2**) that is distinct from the first angle, the spray nozzles being arranged on the perimeter of the annular discharge device (20) with an alternation of nozzles of the first set (221) and nozzles of the second set (222).

6. Annular discharge device for discharging a gluing composition according to the preceding claim, **characterized in that** the nozzles of said first set (221) are configured so that they are oriented with respect to the plane of revolution (P) of the annular discharge device with a first angle of inclination (**α1**) lying between 0° and 45° and **in that** the nozzles of said second set (222) are configured so that they are oriented with respect to the plane of revolution of the annular discharge device with a second angle of inclination (**α2**) lying between 25° and 80°.

7. Annular discharge device for discharging a gluing composition according to one of the preceding claims, **characterized in that** the at least two spray nozzles (22, 221, 222) arranged consecutively on the perimeter of the annular discharge device (20) comprise a spray head (36) with a slit (50) with rectangular section so as to form a flat jet of gluing composition.

8. Annular discharge device for discharging a gluing composition according to the preceding claim, **characterized in that** the slit (50) with rectangular section is dimensioned in such a way that the corresponding flat jet of gluing composition has an angular aperture (β) of between 30° and 120°.

9. Annular discharge device for discharging a gluing composition according to one of the preceding claims, **characterized in that** the distribution circuit (24, 26) for the gluing composition comprises a single feed (27, 31) and a plurality of orifices (29, 30) connected respectively with a spray nozzle (22).

10. Annular discharge device for discharging a gluing composition according to one of the preceding claims, **characterized in that** it comprises two distinct distribution circuits (24, 26) that are offset along the axis of revolution (X-X) of the annular discharge device (20), the spray nozzles (22) being arranged between these two distribution circuits so as to be fluidically connected with each of said distribution circuits.

11. Annular discharge device for discharging a gluing composition according to the preceding claim, **characterized in that** a first distribution circuit (24) is configured to receive said gluing composition and a second distribution circuit (26) is configured to receive compressed air.

12. Annular discharge device for discharging a gluing composition according to the preceding claim, **characterized in that** the first distribution circuit (24) has a mean section of diameter less than the diameter of the mean section of the second distribution circuit (26).

13. Annular discharge device for discharging a gluing composition according to one of claims 11 and 12, **characterized in that** it comprises means for controlling the compressed air flow rate as a function of the quantity of gluing composition to be discharged onto the fibres.

14. Mineral wool manufacturing installation (100), comprising fiberization means configured to bring glass fibres into a gluing station (2) for these fibres, **characterized in that** the gluing station comprises only a gluing device formed by an annular discharge device (20) for discharging a gluing composition according to one of the dependent claims, the annular device being arranged so as to have a plane of revolution (P) substantially at right angles to the direction of passage of the torus of fibres to be glued.

15. Mineral wool manufacturing installation according to the preceding claim, wherein the annular discharge device (20) conforms to claim 11, **characterized in that** the annular discharge device is arranged so that the first distribution circuit (24), associated with the gluing composition, is disposed downstream of the path of the fibres with respect to the second distribution circuit (26), associated with the compressed air.

16. Mineral wool manufacturing method implemented by the mineral wool manufacturing installation according to the claim 14 or 15, during which at least the following steps are carried out:
- molten glass is brought into a fiberization station,
- glass fibres are created in this fiberization station, in such a way that these glass fibres take the form of a bundle of fibres directed towards a gluing station,
- in the gluing station, the fibres of the bundle are bound together by the addition of a gluing composition, the fibres of the bundle being bound directly upon their entry into the gluing station without a cooling ring being arranged in the gluing station,
- and the batt of fibres glued together obtained previously is transformed by heating to form the mineral wool.
